**Europäisches Patentamt**

(19) **European Patent Office**

**Office européen des brevets**

(11) Veröffentlichungsnummer: **0 191 328**
**B1**

(12) **EUROPÄISCHE PATENTSCHRIFT**

(45) Veröffentlichungstag der Patentschrift:
16.08.89

(51) Int. Cl.⁴: **G 02 B 6/42**

(21) Anmeldenummer: **86100794.6**

(22) Anmeldetag: **22.01.86**

(54) Optoelektronisches Modul.

(30) Priorität: **13.02.85 DE 3504947**

(43) Veröffentlichungstag der Anmeldung:
**20.08.86 Patentblatt 86/34**

(45) Bekanntmachung des Hinweises auf die Patenterteilung:
**16.08.89 Patentblatt 89/33**

(84) Benannte Vertragsstaaten:
**AT CH DE FR GB LI NL SE**

(56) Entgegenhaltungen:
**CH-A- 644 948**
**FR-A- 2 437 637**
**US-A- 4 204 743**
**US-A- 4 281 891**

**PATENTS ABSTRACTS OF JAPAN, Band 6, Nr. 212**
**(P-151)[1090], 26. October 1982 & JP - A - 57 118 212**

(73) Patentinhaber: **Siemens Aktiengesellschaft,**
**Wittelsbacherplatz 2, D-8000 München 2 (DE)**

(72) Erfinder: **Haberland, Detlef, Dr. rer. nat. Dipl.-Phys.,**
**Fichtenstrasse 14, D-8031 Steinebach/Wörthsee (DE)**
Erfinder: **Langenwalter, Michael, Dr. Phyl.,**
**Schulerstrasse 8, D-8035 Stockdorf (DE)**
Erfinder: **Smola, Jan, Dipl.-Ing., Kemptenerstrasse 35,**
**D-8000 München 71 (DE)**

ACTORUM AG

## Beschreibung

Die Erfindung geht von dem im Oberbegriff des Patentanspruches 1 definierten optoelektronischen Modul aus, das für sich durch die US-PS 3 950 075 vorbekannt ist.

Bei dem bekannten Modul besteht die (Ring-) Öffnung im wesentlichen aus einem Plastikring, dessen Deformierbarkeit ausgenutzt wird, um in ihn eine Kugellinse als Sammellinse selbstklemmend hineinzuschieben. Dieses bekannte Modul hat bereits den Vorteil, dass mit Hilfe des Linsensystems, welches hier durch eine einzige Kugellinse gebildet wird, zumindest zeitweise eine sehr gute optische Anpassung zwischen dem Bauelement und dem von aussen dem Modul zugeführten Lichtwellenleiter erreicht werden kann.

Es zeigt sich jedoch, dass das bekannte Modul für viele Fälle nicht ausreichend lange voll betriebsfähig ist. Untersuchungen dieses bekannten Moduls ergaben, dass Verunreinigungen des Gases im Inneren des Moduls auftreten können, welche die Qualitäten des Bauelementes mit der Zeit unangenehm beeinträchtigen können. Dies beruhte vor allem auf der nachlassenden Dichtigkeit des Spaltes zwischen dem Ring und der Kugellinse und/oder zwischen dem Ring und der Gehäusewand. Abhilfe z.B. durch Einkleben der Kugellinse in den Plastikring – auch in einen Ring aus anderem Material – bewirken zwar, dass die Kugellinse und der Ring zunächst hermetisch dicht in die Gehäusewand des Moduls einfügbar war, so dass von aussen her zunächst keine die Modulqualitäten beeinträchtigenden Verunreinigungen mehr eindringen konnten. Es zeigte sich jedoch, dass solche Einfügungen häufig mit der Zeit nicht ausreichend hermetisch dicht blieben. Häufig bekam nämlich der Klebstoff Risse, und selbst der Kunststoff war für sich nicht ganz gasdicht und feuchtedicht. Darüber hinaus war die Gefahr der Verschmutzung des Linsensystems durch Klebstoff relativ gross.

Die Erfindung hat die Aufgabe, das Langzeitverhalten des Moduls zu verbessern, insbesondere die Dauer der vollen Betriebsfähigkeit, insbesondere der Verschmutzungsfreiheit des Bauelements bzw. des Moduls, mit hoher Sicherheit stark zu erhöhen.

Der Lösung dieser Aufgabe der Erfindung liegt das Konzept zugrunde, die hermetische Dichtheit der Einsetzung des Linsensystems in das Gehäuse des Moduls langzeitstabil zu verbessern, und zwar durch Massnahmen, welche besonders wenig Aufwand erfordern. Die gegenseitige Justierung des Ringes und der umfassten Linse sollte schon im noch nicht eingesetzten Zustand, also auch schon während der Lagerung dieser Linse/Ring-Einheit, beliebig dauerhaft präzise herstellbar sein, diese Einheit sollte auch leicht herstellbar und präzise und leicht in die Gehäusewand hermetisch dicht einfügbar sein, sowie aus gasdichten alterungsbeständigen Materialien bestehen.

Die auf diesem Konzept und Forderungskatalog beruhende Aufgabe der Erfindung ist durch die im Patentanspruch 1 angegebenen Massnahmen lösbar.

Die in den Unteransprüchen angegebenen zusätzlichen Massnahmen gestatten, zusätzliche Vorteile zu erreichen.

So gestatten die Massnahmen gemäss Patentanspruch

2) den Ausschuss bei der Herstellung der Linse/Ring-Einheit verringern sowie eine Linse höchster optischer Qualität verwenden zu können, also z.B. eine präzis auf deutlich unter 1 μm genau geschliffene polierte und dauerhaft oberflächenvergütete Linse verwenden zu können, ohne die optische Güte dieser Linse im Rahmen der Herstellung des Moduls wesentlich zu beeinträchtigen, insbesondere ohne hierbei starke innere Spannungen in der Linse und damit stark störende optische Schlieren zu erzeugen,

3) ein Platzen der miteinander verwachsenen Linse/Ring-Einheit – insbesondere bei deren Herstellung, bei deren Lagerung und bei deren Stossbelastung z.B. bei deren späterem Einsetzen in die Gehäusewand – weitgehend vermeiden zu können, sowie innere Spannungen in der Linse und damit eine Verschlechterung ihrer optischen Güte sowie ein Kriechen der miteinander verwachsenen Gläser und damit ein allmähliches Verschlechtern der optischen Güte und/oder Justierung der Linse bei lange andauernden höheren Betriebstemperaturen der Linse weitgehend vermeiden zu können,

4) und 5) eine Verschlechterung der optischen Güte der Linse bei deren Verwachsen mit dem Ring mit besonders hoher Sicherheit vermeiden zu können,

6) selbst bei grösseren Differenzen der Temperaturausdehnungskoeffizienten einerseits des Glases der Linse und andererseits des Glases des Ringes – die inneren Spannungen in der Linse, welche evtl. nach dem Verwachsen und Erkalten der Linse/Ring-Einheit durch Druckkräfte bzw. Zugkräfte bzw. Scherkräfte des Ringes auf die Linse auftreten können, möglichst klein machen zu können, wodurch die optischen Qualitäten der Linse langzeitstabil besonders wenig beeinträchtigt werden,

7) eine besonders breite Verwachsungszone und damit eine besonders sichere hermetische Dichtung sowie einen besonders grossen Schutz gegen Beschädigung der verwachsenen Linse/Ring-Einheit bei deren Zwischenlagerung und bei deren Einsetzen in die Gehäusewand zu erreichen,

8) einen Sammellinsentyp verwenden zu können, der keinen besonderen Aufwand erfordert, um die optische Achse der Linse mit der Achse des Rohres zusammenfallen lassen zu können,

9) eine leichte Austauschbarkeit und damit leichte Reparierbarkeit der Linse erreichen zu können,

10) Dejustierungen der Linse, welche oft vor allem durch thermisch bedingte Ausdehnungen während der unlösbaren Befestigung des Ringes an der Gehäusewand sowie durch wechselnd starke Erwärmungen im späteren Betrieb des Moduls bewirkt werden, klein machen zu können,

11) eine unlösbare Befestigung ohne starke Erwärmung des Glases des Ringes, also ohne die damit verbundenen Gefahren von Dejustierungen der Linse und ohne schwer beherrschbare Verformungen des Ringes durch Teigigwerden, zu ermöglichen,

12) eine besondere, bei Bedarf auch senkrecht zur Rohrachse orientierbare Aussenoberfläche am Ring zur Befestigung an der Gehäusewand ausnutzen zu können, wobei der betreffende Flansch leicht, sogar schon im Rahmen des Verwachsens der Linse mit dem Ring, im teigigen Zustand des Ringes sogar schon durch Drücken hergestellt werden kann; ferner bei alleiniger Befestigung des Flansches an der Gehäusewand ein nachträgliches Verziehen der Linse durch von dieser Befestigung ausgelöste Kräfte weitgehend vermeiden zu können,

13) und 14) den Ring für sich in besonders einfacher Weise herstellen zu können,

15) den thermischen Ausdehnungskoeffizienten des Ringes an die thermischen Ausdehnungskoeffizienten der Linse und der Gehäusewand lokal gut anpassen zu können, selbst wenn die Temperaturausdehnungskoeffizienten der Linse und der Gehäusewand für sich sehr unterschiedlich sind,

16) eine besonders breite Verschmelzungszone und damit eine besonders sichere hermetische Dichtigkeit sowie einen besonders grossen Schutz gegen Beschädigung der verwachsenen Linse/Ring-Einheit bei deren Zwischenlagerung und beim Einsetzen erreichen zu können,

17) einen sehr stabilen Metallring verwenden zu können, z.B. um eine besonders hohe Sicherheit gegen Zerspringen des Ringes bei der Montage des Moduls zu erreichen, sowie eine gute Wärmeleitung zwischen einerseits der Gehäusewand und andererseits der Verschmelzungszone bzw. dem dortigen Linsenrand erreichen zu können,

18) eine besonders zuverlässig auf lange Zeit hermetisch dichte Befestigung des Ringes an der Gehäusewand erreichen zu können,

19) auf besonders einfache Weise das Verwachsen der Linse und des Ringes erreichen zu können,

20) ein Verkleben bzw. Verkratzen der Glasoberfläche der Linse und/oder des Ringes auf einfache Weise vermeiden zu können,

21) die Linse/Ring-Einheiten in hoher Stückzahl präzise und auf besonders einfache Weise in Serienfertigung herstellen zu können,

22) die gegenseitige Justierung des Ringes und der Linse in ihrer Soll-Lage vor der gegenseitigen anschliessenden Verwachsung erleichtern zu können, sowie ein Verwachsen benachbart auf der Trägerplatte angeordneter Ringe leicht vermeiden zu können,

23) die Zapfen der Trägerplatte in besonders einfacher Weise herstellen zu können, sowie

24) bereits im Rahmen der Verwachsung der Linse mit dem Ring auf der Trägerplatte das Anlöten des Ringes an der Gehäusewand vorbereiten zu können.

Die Erfindung wird anhand der in den Figuren gezeigten speziellen Ausführungsbeispiele der Erfindung weiter erläutert. Dabei zeigt die Figur

1) ein Modulbeispiel mit am Gehäuse montierter Linse/Ring-Einheit,

2) einen eine andere Linse/Ring-Einheit zeigenden Ausschnitt,

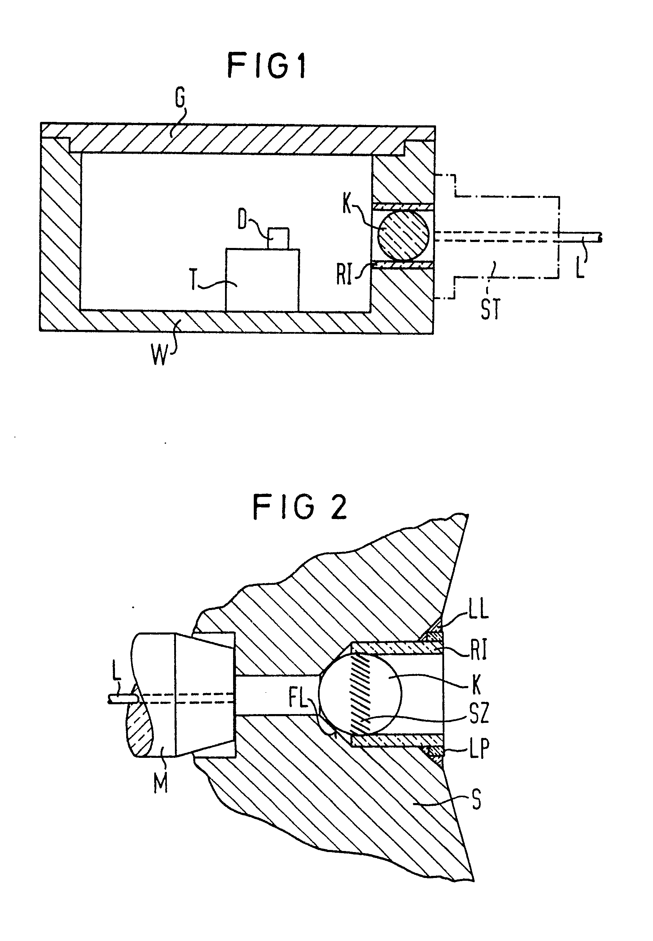

3) ein anderes Modulbeispiel mit Glasfaserstecker und mit montierter Linse/Ring-Einheit gemäss Fig. 2,

4) ein Beispiel für eine Graphit-Trägerplatte mit Graphithöckern, auf denen zwei verschiedene Beispiele von bereits miteinander verwachsenen Linse/Ring-Einheiten liegen, sowie

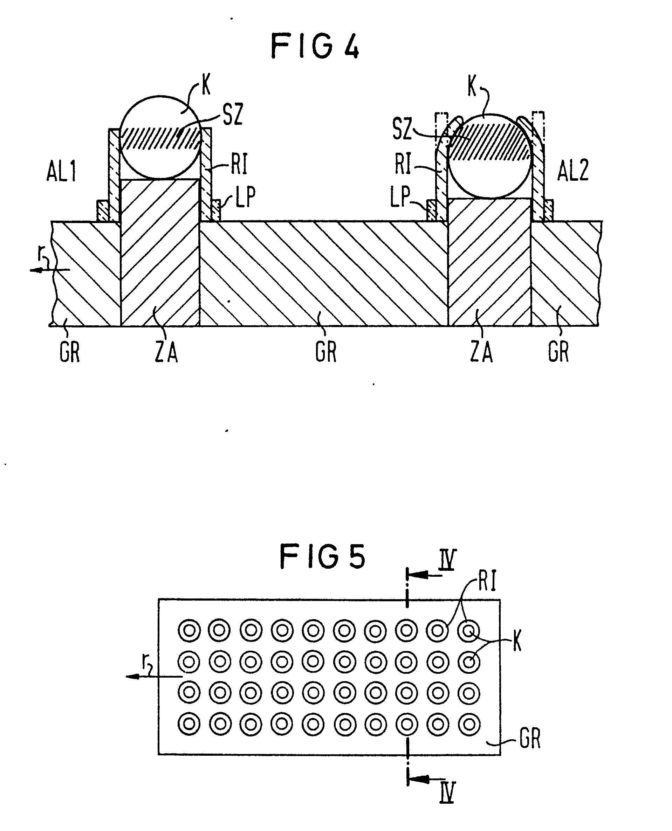

5) eine Draufsicht auf eine Trägerplatte, welche gemäss Fig. 4 aufgebaut sein kann.

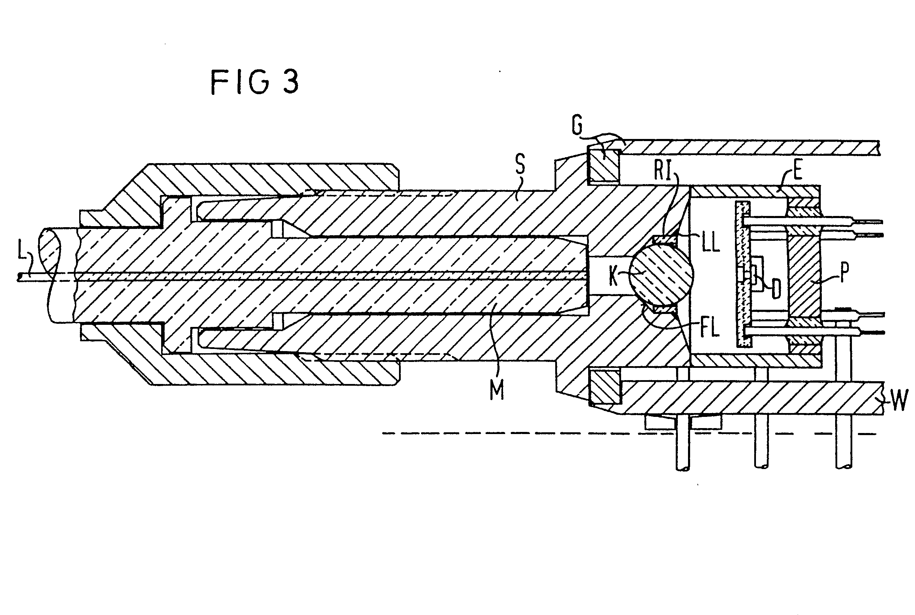

Die Fig. 1 und 3 zeigen also zwei verschiedene Modulbeispiele mit jeweils hermetisch dichten Gehäusen G/W in Fig. 1, und S/G/W bzw. mit hermetisch dichtem Innengehäuse S/E/P in Fig. 3. In beiden Beispielen enthalten diese Gehäuse ein optoelektronisches Bauelement, also z.B. eine lichtempfangende Fotodiode und/oder z.B. eine lichtsendende Laserdiode.

In beiden Beispielen bildet ein Ring RI eine optische Öffnung in der Gehäusewand, vgl. G/W bzw. S/G/W bzw. S/E/P. Die Öffnung dient zur Weiterleitung des mit Informationen modulierten Lichtes von dem Bauelement D durch die Gehäusewand W bzw. S hindurch zu einem optischen Bauteil L, z.B. zu einem Lichtwellenleiter L, also z.B. zu einer Monomodeglasfaser L – und/oder von einem optischen Bauteil L durch die Gehäusewand W, S hindurch zu dem Bauelement D.

Ferner ist in beiden Figuren ein Linsensystem K aus zumindest einer Linse K, darunter zumindest einer Sammellinse hier Kugellinse K, gezeigt, wobei zumindest eine dieser Linsen, vgl. die Kugellinse K, jeweils von dem Ring RI, zumindest von einem Abschnitt des Ringes RI, umfasst wird,

Erfindungsgemäss wurde zunächst zumindest eine der Linsen, welche aus Glas besteht, – hier die gläserne geschliffene polierte und oberflächenvergütete Kugellinse K von z.B. 2,0000 ± 0,0005 mm Durchmesser – von dem Ring RI, welcher ebenfalls aus Glas besteht, rundum hermetisch dicht unter Bildung einer Verwachsungszone SZ verwachsen, vgl. den Ausschnitt in Fig. 2. Der Ring RI ist seinerseits hermetisch dicht in die Gehäusewand W, S eingesetzt, vgl. z.B. die rund um ein Rohrende liegende Lötnaht LL in Fig. 2 und 3.

Beide Beispiele haben den Vorteil, dass mit Hilfe des Linsensystems, welches hier durch eine einzige Kugellinse K gebildet wird, eine sehr gute optische Anpassung zwischen dem Bauelement D und dem von aussen dem Modul zugeführten Lichtwellenleiter L erreicht werden kann. Beide Beispiele sind für besonders lange Zeit voll betriebsfähig. Verunreinigungen des Gases im Inneren des Moduls sind für besonders lange Zeit vermieden. Damit sind die Qualitäten des Bauelementes D entsprechend wenig beeinträchtigt. Die Dichtigkeit des Spaltes zwischen dem Ring und der Kugellinse und/oder zwischen dem Ring und der Gehäusewand lässt ja nicht mehr mit der Zeit nach, wobei auch die Linse K und der Ring RI langzeitstabil hermetisch dicht in die Gehäusewand des Moduls eingefügt sind, so dass auch dort von aussen her keine die Modulqualitäten beeinträchtigenden· Verunreinigungen mehr in das Gehäuse eindringen können. Daneben existiert keine Gefahr der Verschmutzung des Linsensystems mehr durch Klebstoff.

Die Erfindung löst also die Aufgabe, das Langzeitverhalten des Moduls zu verbessern, insbesondere die Dauer der vollen Betriebsfähigkeit insbesondere der Verschmutzungsfreiheit des Bauelements bzw. des Moduls mit hoher Sicherheit stark zu erhöhen, indem die hermetische Dichtheit des Linsensystems und seines Ringes ·langzeitstabil verbessert wird, und zwar durch Massnahmen, welche besonders wenig Aufwand erfordern. Die gegenseitige Justierung des Ringes und der umfassten Linse ist schon im noch nicht eingesetzten Zustand, also auch schon während der Lagerung dieser Linse/Ring-Einheit, beliebig präzise herstellbar, und zwar langzeitstabil durch Verwachsen; – wobei diese Einheit auch leicht herstellbar und leicht in die Gehäusewand hermetisch dicht einfügbar ist, sowie aus gasdichten alterungsbeständigen Materialien besteht.

Bevorzugterweise werden bei der Erfindung spezielle Gläser verwendet. Das Glas des Ringes RI soll nämlich bevorzugterweise zumindest im Bereich der Verwachsungszone SZ, vgl. Fig. 2, einen ähnlichen Temperaturausdehnungskoeffizienten wie das Glas der vom Ring RI umfassten Linse K aufweisen. Dadurch kann man den Ausschuss bei der Herstellung der Linse/Ring-Einheit K/RI verringern, sowie eine Linse K von höchster optischer Qualität verwenden, also z.B. eine präzis, z.B. auf weit unter 1 μm genau geschliffene und polierte, dauerhaft oberflächenvergütete Linse K verwenden, ohne die optische Güte dieser Linse im Rahmen der Herstellung des Moduls wesentlich zu beeinträchtigen, insbesondere ohne in hohem Masse innere Spannungen in der Linse und damit optisch störende Schlieren zu riskieren.

Solche inneren Spannungen und Schlieren sind, soweit sie überhaupt zunächst beim Verwachsen auftreten mögen, besonders dadurch abbaubar, dass man gemeinsam den Ring RI und die Linse K nach ihrem Verwachsen noch tempert. Dadurch wird ausserdem ein Platzen der miteinander verwachsenen Linse/Ring-Einheit vermeidbar, besonders bei der Herstellung dieser Einheit K/RI sowie bei ihrer Lagerung und der Stossbelastung z.B. bei ihrem späteren Einsetzen in die Gehäusewand W bzw. S. Ferner wird dadurch ein Kriechen der Gläser K/RI und damit ein allmähliches Verschlechtern der optischen Qualität der Linse K selbst bei lange andauernden höheren Betriebstemperaturen der Linse langzeitstabil weitgehend vermeidbar.

Günstig ist, den Teigigkeitspunkt des Glases des Ringes RI (also die Grenztemperatur, oberhalb welches das Glas des Ringes RI teigig wird) niedriger zu wählen, z.B. um 50 °C niedriger, als den Teigigkeitspunkt des Glases der Linse K. Selbst wenn man den Ring RI und die Linse K kurzzeitig etwas über den Teigigkeitspunkt des Linsenglases erwärmen würde, dann wäre der Ring RI besonders weich und würde sich schon wegen seiner Oberflächenspannung an die Linse K rasch anschmiegen und mit der Linse K verwachsen. Gefahrloser für die optische Qualität der Linse K ist aber, den Ring RI sowie die Linse K zum Verwachsen nur auf eine Temperatur zu erhitzen, welche zwar deutlich über dem Teigigkeitspunkt des Glases des Ringes RI, aber deutlich noch unter dem Teigigkeitspunkt des Glases der Linse K liegt. Dann schmiegt sich beim Verwachsen der teigige Ring RI leicht, z.B. bereits wegen seiner Oberflächenspannung, an die dann noch steife Linse K an, ohne dabei riskieren zu müssen, dass sich auch die Linse K verformt.

In Fig. 2 und in Fig. 4/links ist ein Beispiel gezeigt, bei welchem die Verwachsungszone SZ an einem Ende des Rohres RI liegt. Dies hat den Vorteil, dass – selbst bei grösseren Differenzen der Temperaturausdehnungskoeffizienten einerseits des Glases der Linse K und andererseits des Glases des Ringes RI – die nach dem Verwachsen und Erkalten evtl. noch auftretenden inneren Spannungen in der Linse, welche durch Druckkräfte bzw. Zugkräfte bzw. Scherkräfte des Ringes RI auf die Linse entstehen können, klein bleiben, wodurch die optischen Qualitäten der Linse besonders langzeitstabil unbeeinträchtigt sind.

Wenn hingegen, vgl. Fig. 4/rechts, die Verwachsungszone SZ an der Innenoberfläche des Rohres RI im Inneren des Rohres RI liegt, kann eine besonders breite Verwachsungszone SZ und damit eine besonders sichere hermetische Dichtung sowie ein besonders grosser Schutz gegen Beschädigung der verwachsenen Linse/Ring-Einheit K/RI bei deren Zwischenlagerung und bei deren Einsetzen in die Gehäusewand erreicht werden.

Sehr günstig ist, wenn wie in Fig. 1 bis 4 die vom Ring umfasste Linse K durch eine Kugellinse K gebildet wird, also durch eine Typ von Sammellinse, welcher keinen besonderen Aufwand erfordert, um die optische Achse der Linse mit der Achse des Rohres zusammenfallen lassen zu können.

Eine leichte Austausch- und damit leichte Reparierbarkeit der Linse ist dadurch erreichbar, dass man den Ring RI lösbar, aber hermetisch dicht, an der Gehäusewand S befestigt, also z.B. mittels einer Gummidichtung, und Klemmen der Einheit K/RI über die Gummidichtung an die Gehäusewand.

Andererseits ist es jedoch auch sehr günstig, den Ring RI zwar an seiner Aussenoberfläche, aber nahe der Verwachsungszone SZ, welcher kleiner als der Durchmesser der Linse K ist – mit der Gehäusewand unlösbar zu verbinden, wobei man – zur Erleichterung der gegenseitigen Justierungen von Bauelement D, Linse K und Lichtwellenleiter bzw. Bauteil L – evtl. auch noch zusätzlich eine Justierfläche, vgl. die konische Fläche FL in Fig. 2, an der Gehäusewand anbringt, welche als Anschlag für die Linse K dient. Durch diese Massnahmen kann die Gefahr von evtl. untolerierbaren Dejustierungen der Linse K, welche oft vor allem durch thermisch bedingte Ausdehnungen während des unlösbaren Verbindens des Ringes RI mit der Gehäusewand sowie durch wechselnd starke Erwärmungen der Einheit K/RI im späteren Betrieb des Moduls bewirkt werden, verringert werden.

Günstig ist z.B., eine unlösbare Verbindung dadurch herzustellen, dass man den Ring RI an der Gehäusewand durch Verlöten mittels einer Lötmasse, deren Schmelztemperatur niedriger als der Teigigkeitspunkt des Glases des Ringes RI ist, befestigt. Auf diese Weise kann die unlösbare Verbindung ohne starke Erwärmung des Glases des Ringes RI, also ohne die damit verbundenen Gefahren von Dejustierungen der Linse K und ohne schwer beherrschbare Verformungen des Ringes RI durch dessen Teigigwerden, hergestellt werden.

Der Ring RI braucht nicht immer wie in den Figuren 1 bis 4 einen konstanten Aussendurchmesser aufzuweisen. Der Ring RI kann an seiner Aussenoberfläche auch z.B. einen Flansch aufweisen, wobei der Ring RI im wesentlichen z.B. an seiner Flanschoberfläche, jedoch nicht oder nur kaum an seiner sonstigen Aussenoberfläche mit der Gehäusewand verbunden werden kann. So kann man also auch eine besondere, bei Bedarf auch senkrecht zur Rohrachse orientierbare Aussenoberfläche am Ring RI zur Befestigung an der Gehäusewand ausnutzen, wobei der betreffende Flansch leicht, auch im Rahmen des Verwachsens der Linse mit dem Ring, im teigigen Zustand des Ringes, z.B. auch durch Drücken, hergestellt werden kann; ferner kann dann bei alleiniger Befestigung des Flansches an der Gehäusewand ein nachträgliches Verziehen der Linse K durch von dieser Befestigung ausgelöste Kräfte weitgehend vermieden werden.

Günstig ist, den Ring RI völlig aus Glas zu machen, z.B. indem man den Ring RI durch Zerschneiden eines zylindrischen Glasrohres in passend lange Abschnitte herstellt, wobei dann der Ring RI durch einen solchen Abschnitt des Glasrohres mit kreisringförmigem Querschnitt gebildet wird.

Der Ring RI kann auch aus verschiedenen Gläsern zonenweise verschmolzen sein; es kann dann nämlich das Glas des Ringes RI im Bereich der Verwachsungszone SZ einen ähnlichen Temperaturausdehnungskoeffizienten wie das Glas der Linse K aufweisen, – aber das Glas des Ringes RI nahe bei der Zone, an welcher der Ring RI an der Gehäusewand S befestigt ist, einen anderen Temperaturausdehnungskoeffizienten aufweisen, welcher mehr dem Temperaturausdehnungskoeffizienten der Gehäusewand entspricht. Man kann dadurch nämlich den thermischen Ausdehnungskoeffizienten des Ringes RI sowohl an den thermischen Ausdehnungskoeffizienten der Linse K als auch den der Gehäusewand W, S lokal gut anpassen, selbst wenn die Temperaturausdehnungskoeffizienten der Linse K und der Gehäusewand W bzw. S für sich sehr unterschiedlich sind.

Die Fig. 4 zeigt rechts ein Beispiel AL2 einer Linse/Ring-Einheit K/RI, bei welcher die Linse K nach dem Verwachsen so weit im Inneren des Rohres RI liegt und der Ring RI so stark auf die Linse K aufgeschrumpft ist, dass die Linse K auch weit abseits ihres grössten Umfanges mit dem Rohr RI verwachsen ist. Dadurch wird, anders als bei dem in Fig. 4/links gezeigten Beispiel AL1, eine besonders breite Verschmelzungszone und damit eine besonders sichere hermetische Dichtigkeit sowie ein besonders grosser Schutz gegen Beschädigung der verwachsenen Linse/Ring-Einheit bei deren Zwischenlagerung und beim Einsetzen erreicht.

Man kann den Ring RI auch mehrschichtig machen, nämlich einen an sich metallischen Ring RI verwenden, welcher an seiner Innenoberfläche, zumindest im Bereich der Verwachsungszone SZ auf dem Metall haftendes Glas, also Emaille enthält, wobei diese Emailleschicht eine Verwachsungszone SZ mit der Linse K aufweist. Man kann dann einen sehr stabilen Metallring verwenden, z.B. um eine besonders hohe Sicherheit gegen Zerspringen des Ringes RI bei der Montage des Moduls zu erreichen, sowie um eine gute Wärmeleitung zwischen einerseits der Gehäusewand und andererseits der Verschmelzungszone SZ bzw. dem dortigen Linsenrand zu erreichen. Ein solcher Metallring RI kann auch an der Gehäusewand durch Verschweissen in unlösbarer Weise befestigt sein, wodurch eine besonders zuverlässig auf lange Zeit hermetisch dichte Befestigung des Ringes RI an der Gehäusewand erreicht wird.

Zum Herstellen der Verwachsung zwischen dem Glas der Linse K und dem Glas oder Emaille des Ringes RI kann man, vor dem Verwachsen des Ringes RI und der Linse K, den Ring RI und die Linse K in ihrer gegenseitigen Soll-Lage anordnen, und zwar hierbei auf eine Trägerplatte GR legen, und danach die Trägerplatte GR in die Hitzezone eines Ofens bringen, vgl. Fig. 4 und 5. Damit kann man auf besonders einfache Weise das Verwachsen der Linse K und des Ringes RI erreichen. Ein Verkleben bzw. Verkratzen der Glasoberfläche der Linse K und/oder des Ringes RI kann man hierbei auf einfache Weise dadurch vermeiden, dass man die Trägerplatte GR aus Graphit macht.

Wenn hierbei der Ofen durch einen Durchlauferhitzungsofen gebildet wird, vgl. die Bewegungsrichtung r in Fig. 4 und 5, dann kann man die auf der Trägerplatte GR angeordneten Linse/Ring-Einheiten in hoher Stückzahl präzise und auf besonders einfache Weise in Serienfertigung herstellen.

Günstig ist, wenn die Trägerplatte GR einen bzw. mehrere Höcker ZA aufweist, über welche jeweils der Ring RI gestülpt ist und auf welche die Linse K gelegt wird, vgl. Fig. 4 und 5. Man kann so ein starkes Schrumpfen des über den Höcker ZA gestülpten, später an der Gehäusewand zu befestigenden Ringsegmentes vermeiden, sowie die gegenseitige Justierung des Ringes RI und der Linse K in ihrer Soll-Lage vor der gegenseitigen anschliessenden Verwachsung erleichtern, sowie ein Verwachsen benachbart auf der Trägerplatte angeordneter Ringe vermeiden.

Die Zapfen ZA der Trägerplatte GR sind in besonders einfacher Weise dadurch herstellbar, dass man jeweils in der Trägerplatte GR eine Bohrung anbringt, durch welche ein Graphitzapfen ZA so gesteckt ist, dass ein Teil des Zapfens ZA als Höker über die Oberfläche der Trägerplatte GR hinausragt.

Wenn, bevor die Trägerplatte GR in die Hitzezone gebracht wird, an der Aussenoberfläche des Ringes RI eine Metallisierung, z.B. eine Lotpaste LP, zur Vorbereitung der späteren Verlötung des Ringes RI mit der Gehäusewand angebracht wird, vgl. Fig. 2 und 4, dann kann man bereits im Rahmen der Verwachsung der Linse K mit dem Ring RI auf der Trägerplatte GR das Anlöten des Ringes RI an die Gehäusewand vorbereiten.

Die Erfindung lässt zu, dass bei Bedarf im Inneren des Gehäuses, und bei Bedarf auch in und/oder an weiteren Stellen der Gehäusewand, beliebige weitere Vorrichtungen angebracht werden, wofür die Fig. 1 bis 3 einige Beispiele zeigen, vgl. z.B. den in Fig. 1 gezeigten tischförmigen Temperaturstabilisator T, vgl. auch die Glasfaserstützvorrichtung ST in Fig. 1, den als herausziehbaren Steckerstift M ausgebildeten Glasfaseranschluss M/L mit dem Steckergegenstück S in Fig. 2 und 3, oder vgl. die tischartige Halterung des Bauelementes D im Inneren des inneren Gehäuses S/E/P und damit im Inneren eines äusseren Gehäuses S/G/W in Fig. 3 – wobei sowohl das gezeigte innere Gehäuse als auch das äussere Gehäuse jeweils für sich dauerhaft hermetisch dicht hergestellt werden mag.

## Patentansprüche

1. Optoelektronisches Modul mit
- einem optoelektronischen Bauelement (D), z.B. einer lichtempfangenden Fotodiode (D) und/oder z.B. einer lichtsendenden Laserdiode (D),
- einem Ring (RI) als einer optischen Öffnung in der Gehäusewand (G/W, S/G/W) zur Weiterleitung des mit Informationen modulierten Lichtes von/zu dem Bauelement (D) durch die Gehäusewand (W, S) hindurch zu/von einem optischen Bauteil (L), z.B. zu/von einem Lichtwellenleiter (L) also z.B. zu/von einer Monomodeglasfaser (L), und
- einem Linsensystem (K) aus zumindest einer Linse (K), darunter zumindest einer Sammellinse (K), welches von dem Ring (RI), zumindest von einem Abschnitt des Ringes (RI), umfasst wird, insbesondere für die Schnittstelle zwischen einer elektrischen Verbindungsleitung und einer optischen Glasfaser (L) eines Nachrichtensystems, dadurch gekennzeichnet, dass
- zumindest eine (K) der Linsen, welche aus Glas besteht, von dem Ring (RI), welcher im wesentlichen ebenfalls aus Glas besteht, rundum hermetisch dicht durch Bildung einer Verwachsungszone (SZ) verwachsen ist, und
- der Ring (RI) hermetisch dicht in die Gehäusewand (W, S) eingesetzt ist.

2. Modul nach Patentanspruch 1, dadurch gekennzeichnet, dass
- das Glas des Ringes (RI) zumindest im Bereich der Verwachsungszone (SZ) einen ähnlichen Temperaturausdehnungskoeffizienten wie das Glas der vom Ring (RI) umfassten Linse (K) aufweist.

3. Modul nach einem der vorhergehenden Patentansprüche, dadurch gekennzeichnet, dass
- gemeinsam der Ring (RI) und die Linse (K) nach ihrem Verwachsen getempert wurden.

4. Modul nach einem der vorhergehenden Patentansprüche, dadurch gekennzeichnet, dass
- der Teigigkeitspunkt des Glases des Ringes RI), also die Grenztemperatur, oberhalb welcher das Glas des Ringes (RI) teigig wird, niedriger ist, z.B. um 50 °C niedriger ist, als der Teigigkeitspunkt des Glases der Linse (K).

5. Modul nach Patentanspruch 4, dadurch gekennzeichnet, dass
- der Ring (RI) sowie die Linse (K) zum Verwachsen auf eine Temperatur erhitzt waren, welche über dem Teigigkeitspunkt des Glases des Ringes (RI), aber unter dem Teigigkeitspunkt des Glases der Linse (K) lag.

6. Modul nach einem der vorhergehenden Patentansprüche, dadurch gekennzeichnet, dass
- die Verwachsungszone (SZ) an einem Ende des Rings (RI) liegt.

7. Modul nach einem der Patentansprüche 1 bis 5, dadurch gekennzeichnet, dass
- die Verwachsungszone (SZ) an der Innenoberfläche des Rohres (RI) im Inneren des Rohres (RI) liegt.

8. Modul nach einem der vorhergehenden Patentansprüche, dadurch gekennzeichnet, dass
- die vom Ring umfasste Linse (K) durch eine Kugellinse (K) gebildet wird.

9. Modul nach einem der vorhergehenden Patentansprüche, dadurch gekennzeichnet, dass
- der Ring (RI) lösbar, aber hermetisch dicht, an der Gehäusewand (S) befestigt ist.

10. Modul nach einem der Patentansprüche 1–8, dadurch gekennzeichnet, dass
- der Ring (RI) zwar an seiner Aussenoberfläche, aber nahe der Verwachsungszone (SZ), – jedenfalls in einem Abstand von der Verwachsungszone (SZ), welcher kleiner als der Durchmesser der Linse (K) ist – mit der Gehäusewand (S) unlösbar verbunden ist.

11. Modul nach einem der Patentansprüche 1–8 oder bevorzugt nach Patentanspruch 10, dadurch gekennzeichnet, dass
- der Ring (RI) an der Gehäusewand (S) durch Verlöten mittels einer Lötmasse, deren Schmelztemperatur niedriger als der Teigigkeitspunkt des Glases des Ringes (RI) ist, befestigt ist.

12. Modul nach einem der vorhergehenden Patentansprüche, bevorzugt nach Patentanspruch 10, dadurch gekennzeichnet, dass

– der Ring (RI) an seiner Aussenoberfläche einen Flansch aufweist und

– der Ring (RI) im wesentlichen an seiner Flanschoberfläche, jedoch nicht oder nur kaum an seiner sonstigen Aussenoberfläche mit der Gehäusewand (S) verbunden ist.

13. Modul nach einem der vorhergehenden Patentansprüche, dadurch gekennzeichnet, dass

– der Ring (RI) völlig aus Glas besteht.

14. Modul nach Patentanspruch 13, dadurch gekennzeichnet, dass

– der Ring (RI) durch den Abschnitt eines Glasrohres mit kreisringförmigem Querschnitt gebildet wird.

15. Modul nach Patentanspruch 13 oder 14, dadurch gekennzeichnet, dass

– der Ring aus verschiedenen Gläsern hergestellt ist, nämlich

– das Glas des Ringes (RI) im Bereich der Verwachsungszone (SZ) einen ähnlichen Temperaturausdehnungskoeffizienten wie das Glas der Linse (K) aufweist, aber

– das Glas des Ringes (RI) nahe bei der Zone, an welcher der Ring (RI) an der Gehäusewand (S) befestigt ist, einen Temperaturausdehnungskoeffizienten aufweist, welcher mehr dem Temperaturausdehnungskoeffizienten der Gehäusewand entspricht.

16. Modul nach zumindest einem der vorhergehenden Patentansprüche, darunter Patentanspruch 7, dadurch gekennzeichnet, dass

– die Linse (K) nach dem Verwachsen so weit im Inneren des Rohres (RI) liegt und der Ring (RI) so stark auf die Linse (K) aufgeschrumpft ist, dass die Linse (K) auch abseits ihres grössten Umfanges mit dem Rohr (RI) verwachsen ist.

17. Modul nach einem der Patentansprüche 1 bis 12, dadurch gekennzeichnet, dass

– der Ring (RI) mehrschichtig ist, nämlich

– der an sich metallische Ring (RI) an seiner Innenoberfläche zumindest im Bereich der Verwachsungszone (SZ) aus auf dem Metall haftenden Glas, also aus Emaille besteht.

18. Modul nach Patentanspruch 17, dadurch gekennzeichnet, dass

– der Ring (RI) an der Gehäusewand (S) durch Verschweissen mit der Gehäusewand (S) befestigt ist.

19. Verfahren zum Herstellen der Verwachsung zwischen dem Glas der Linse (K) und dem Glas des Ringes (RI) des Moduls nach einem der vorhergehenden Patentansprüche, dadurch gekennzeichnet, dass

– vor dem Verwachsen der Ring (RI) und die Linse (K), in ihrer gegenseitigen Soll-Lage angeordnet, auf eine Trägerplatte (GR) gelegt werden, und

– danach die Trägerplatte (GR) in die Hitzezone eines Ofens gebracht wird.

20. Verfahren nach Patentanspruch 19, dadurch gekennzeichnet, dass

– die Trägerplatte (GR) aus Graphit besteht.

21. Verfahren nach Patentanspruch 19 oder 20, dadurch gekennzeichnet, dass

– der Ofen durch einen Durchlauferhitzungsofen gebildet wird.

22. Verfahren nach Patentanspruch 19, 20 oder 21, dadurch gekennzeichnet, dass

– die Trägerplatte (GR) einen Höcker (ZA) aufweist, über welchen der Ring (RI) gestülpt ist und auf welchen die Linse (K) gelegt wird.

23. Verfahren nach Patentanspruch 20 und 22, dadurch gekennzeichnet, dass

– die Trägerplatte (GR) eine Bohrung enthält, durch welche ein Graphitzapfen (ZA) so gesteckt ist, dass ein Teil des Zapfens (ZA) als Höcker über die Oberfläche der Trägerplatte (GR) hinausragt.

24. Verfahren nach einem der Patentansprüche 19 bis 23, dadurch gekennzeichnet, dass

– bevor die Trägerplatte (GR) in die Hitzezone gebracht wird, an der Aussenoberfläche des Ringes (RI) eine Metallisierung (Lotpaste LP) zur Vorbereitung der späteren Verlötung des Ringes (RI) mit der Gehäusewand (S) angebracht wird.

**Revendications**

1. Module optoélectronique comprenant

– un composant optoélectronique (D), par exemple une photodiode réceptrice de lumière (D) et/ou par exemple une diode laser émettrice de lumière (D),

– une bague (RI) formant une ouverture optique dans la paroi du boîtier (G/W, S/G/W) pour la transmission de la lumière, modulée par des informations, depuis/vers le composant (D) à travers la paroi du boîtier (W, S) vers/depuis un élément optique (L), constitué par exemple par un guide d'ondes optique (L), tel qu'une fibre de verre monomode (L) par exemple, ainsi que

– un système à lentille(s) (K), formé d'au moins une lentille (K) et comprenant au moins une fentille convergente (K), qui est entourée par la bague (RI), tout au moins par un tronçon de la bague (RI),

en particulier pour l'interface entre une ligne de liaison électrique et une fibre de verre optique (L) d'un système de télécommunication,

caractérisé en ce que

– au moins l'une (K) des lentilles, qui est en verre, est réunie d'un seul tenant avec la bague (RI) qui est également constituée essentiellement de verre, la liaison étant hermétiquement étanche tout autour et étant formée par une zone d'adhérence (SZ), et

– la bague (RI) est montée de façon étanche, hermétiquement, dans la paroi du boîtier (W, S).

2. Module selon la revendication 1, caractérisé en ce que le verre de la bague (RI) présente un coefficient de dilatation thermique qui est semblable, tout au moins dans la région de la zone d'adhérence (SZ), à celui du verre de la lentille (K) entourée par la bague (RI).

3. Module selon une des revendications précédentes, caractérisé en ce que la bague (RI) et la lentille (K) ont été soumises ensemble à un recuit après leur réunion.

4. Module selon une des revendications précédentes, caractérisé en ce que le point de ramollissement du verre de la bague (RI), c'est-à-dire la température limite au-dessus de laquelle le verre de la bague (RI) devient pâteux, est inférieur, par exemple de 50 °C, au point de ramollissement du verre de la lentille (K).

5. Module selon la revendication 4, caractérisé en ce que, pour la réunion, la bague (RI) et la lentille (K) ont été portées à une température supérieure au point de ramollissement du verre de la bague (RI), mais inférieure au point de ramollissement du verre de la lentille (K).

6. Module selon une des revendications précédentes, caractérisé en ce que la zone d'adhérence (SZ) est située à une extrémité de la bague (RI).

7. Module selon une des revendications 1 à 5, caractérisé en ce que la zone d'adhérence (SZ) est située sur la surface interne de la bague (RI), à l'intérieur de celle-ci.

8. Module selon une des revendications précédentes, caractérisé en ce que la lentille (K) entourée par la bague est une lentille sphérique.

9. Module selon une des revendications précédentes, caractérisé en ce que la bague (RI) est fixée de façon amovible mais hermétiquement étanche à la paroi (S) du boîtier.

10. Module selon une des revendications 1 à 8, caractérisé en ce que la bague (RI) est reliée de façon inamovible à la paroi (S) du boîtier par sa surface externe, mais prés de la zone d'adhérence (SZ) et en tout cas à une distance de cette zone qui est inférieure au diamètre de la lentille (K).

11. Module selon une des revendications 1 à 8 ou, de préférence, selon la revendication 10, caractérisé en ce que la bague (RI) est fixée à la paroi (S) du boîtier par soudage au moyen d'une soudure tendre dont la température de fusion est inférieure au point de ramollissement du verre de la bague (RI).

12. Module selon une des revendications précédentes, de préférence selon la revendication 10, caractérisé en ce que la bague (RI) présente une bride ou collet à sa surface externe et la bague (RI) est reliée à la paroi (S) du boîtier essentiellement par la surface de son collet et non pas ou presque pas par le reste de sa surface externe.

13. Module selon une des revendications précédentes, caractérisé en ce que la bague (RI) est entièrement en verre.

14. Module selon la revendication 13, caractérisé en ce que la bague (RI) est formée par un tronçon d'un tube de verre ayant une section droite en anneau de cercle.

15. Module selon la revendication 13 ou 14, caractérisé en ce que la bague est réalisée de verres différents, de manière que le verre de la bague (RI) dans la région de la zone d'adhérence (SZ) présente un coefficient de dilatation thermique semblable à celui du verre de la lentille (K), mais que le verre de la bague (RI) près de la zone par laquelle la bague (RI) est fixée à la paroi (S) du boîtier, présente un coefficient de dilatation thermique correspondant davantage à celui de la paroi du boîtier.

16. Module selon au moins une des revendications précédentes dont la revendication 7, caractérisé en ce que, après la réunion, la lentille (K) est située si loin à l'intérieur de la bague (RI) et la bague (RI) a été frettée si fortement sur la lentille (K) que cette lentille est également reliée d'un seul tenant à la bague (RI) à côté de sa plus grande circonférence.

17. Module selon une des revendications 1 à 12, caractérisé en ce que la bague (RI) est à plusieurs couches et est constituée plus particulièrement d'une bague métallique (RI) et d'une couche de verre, donc d'émail qui adhère au métal sur la surface interne de la bague, tout au moins dans la région de la zone d'adhérence ou de réunion (SZ) avec la lentille.

18. Module selon la revendication 17, caractérisé en ce que la bague (RI) est fixée à la paroi (S) du boîtier par soudage.

19. Procédé pour réaliser la réunion d'un seul tenant entre le verre de la lentille (K) et le verre de la bague (RI) du module selon une des revendications précédents, caractérisé en ce que
— avant la réunion, la bague (RI) et la lentille (K) sont disposées à leurs positions relatives prescrites sur une plaque de support (GR) et
— la plaque de support (GR) est introduite ensuite dans la zone de chaleur d'un four.

20. Procédé selon la revendication 19, caractérisé en ce que la plaque de support (GR) est en graphite.

21. Procédé selon la revendication 19 ou 20, caractérisé en ce que le four est du type à passage continu.

22. Procédé selon la revendication 19, 20 ou 21, caractérisé en ce que la plaque (GR) présente un support saillant (ZA) sur lequel est enfilée la bague (RI) et sur le dessus duquel est disposée la lentille (K).

23. Procédé selon les revendications 20 et 22, caractérisé en ce que la plaque (GR) présente un perçage dans lequel un tenon en graphite (ZA) est enfiché de manière qu'une partie du tenon (ZA) dépasse de la surface de la plaque (GR) et puisse servir de support saillant.

24. Procédé selon une des revendications 19 à 23, caractérisé en ce que, avant l'introduction de la plaque support (GR) dans la zone de chaleur, une métallisation (pâte à souder LP) est appliquée sur la surface externe de la bague (RI) en préparation du soudage ultérieur de la bague (RI) à la paroi (S) du boîtier.

**Claims**

1. Optoelectronic module comprising
— an optoelectronic component (D), e.g. of a light-receiving photodiode (D) and/or e.g. of a light-transmitting laser diode (D),
— a ring (RI) as an optical opening in the housing wall (G/W, S/G/W) for relaying the light modulated by information from/to the component (D) through the housing wall (W, S) to/from an optical sub-assembly (L), e.g. to/from an optical waveguide (L), thus e.g. to/from a monomode glass fibre (L), and
— a lens system (K) of at least one lens (K), including at least one collector lens (K), which sys-

tem is encompassed by the ring (RI), at least by a section of the ring (RI),

especially for the interface between an electrical connecting line and an optical glass fibre (L) of a communications system, characterized in that

– through the formation of a fusion zone (SZ) at least one (K) of the lens, which consists of glass, is fused all around hermetically tight with the ring (RI), which likewise essentially consists of glass, and

– the ring (RI) is installed hermetically tight in the housing wall (W, S).

2. Module according to patent claim 1, characterized in that

– at least in the region of the fusion zone (SZ) the glass of the ring (RI) has a similar coefficient of thermal expansion as the glass of the lens (K) encompassed by the ring (RI).

3. Module according to one of the preceding patent claims, characterized in that

– after their fusion the ring (RI) and the lens (K) are toughened together.

4. Module according to one of the preceding patent claims, characterized in that

– the pasty point of the glass of the ring (RI), that is to say the temperature limit above which the glass of the ring (RI) becomes pasty, is lower, e.g. lower by 50 °C than the pasty point of the glass of the lens (K).

5. Module according to patent claim 4, characterized in that

– for the purpose of fusion the ring (RI) and the lens (K) were heated to a temperature which lay above the pasty point of the glass of the ring (RI), bur below the pasty point of the glass of the lens (K).

6. Module according to one of the preceding patent claims, characterized in that

– the fusion zone (SZ) lies at an end of the ring (RI).

7. Module according to one of patent claims 1 to 5, characterized in that

– the fusion zone (SZ) lies at the internal surface of the ring (RI) in the interior of the ring (RI).

8. Module according to one of the preceding patent claims, characterized in that

– the lens (K) encompassed by the ring is formed by a spherical lens (K).

9. Module according to one of the preceding patent claims, characterized in that

– the ring 7 (RI) is fixed detachably, but hermetically tight to the housing wall (S).

10. Module according to one of patent claims 1–8, characterized in that

– the ring (RI) is joined non-detachably to the housing wall (S) at its external surface, it is true, but in the vicinity of the fusion zone (SZ), in any case at a distance from the fusion zone (SZ) which is smaller than the diameter of the lens (K).

11. Module according to one of the patent claims 1–8, or preferably according to patent claim 10, characterized in that

– the ring (RI) is fixed to the housing wall (S) by soldering by means of a solder paint, the melting temperature of which is lower than the pasty point of the glass of the ring (RI).

12. Module according to one of the preceding patent claims, preferably according to patent claim 10, characterized in that

– at its external surface the ring (RI) has a flange, and

– the ring (RI) is joined to the housing wall (S) essentially at its flange surface, but not, or only scarcely, at the rest of its external surface.

13. Module according to one of the preceding patent claims characterized in that

– the ring (RI) consists entirely of glass.

14. Module according to patent claim 13 characterized in that

– the ring (RI) is formed by the section of a glass tube having a circular cross-section.

15. Module according to patent claim 13 or 14 characterized in that

– the ring is produced from different glasses, namely in the region of the fusion zone (S), the glass of the ring (RI) has a similar coefficient of thermal expansion as the glass of the lens (K), but

– near the zone at which the ring (RI) is fixed to the housing wall (S), the glass of the ring (RI) has a coefficient of thermal expansion which corresponds more to the coefficient of thermal expansion of the housing wall.

16. Module according to at least one of the preceding patent claims, including patent claim 7, characterized in that

– after fusion the lens (K) lies so far in the interior of the tube (sic) (RI) and the ring (RI) is shrunk so strongly onto the lens (K) that the lens (K) is fused with the tube (sic) (RI) remote from the largest circumference of the latter, as well.

17. Modul according to one of patent claims 1 to 12, characterized in that

– the ring (RI) is multilayered, namely

– at its inner surface the inherently metallic ring RI) consists, at least in the region of the fusion zone (SZ), of glass adhering to the metal, thus of enamel.

18. Module according to patent claim 17, characterized in that

– the ring (RI) is fixed to the housing wall (S) by being welded to the housing wall (S).

19. Process for producing the fusion between the glass of the lens (K) and the glass of the ring (RI) of the module according to one of the preceding patent claims, characterized in that

– before fusion the ring (RI) and the lens (K), arranged in their mutual desired position, ar placed on a carrier plate (GR), and

– the carrier plate (GR) is thereafter brought into the heating zone of a furnace.

20. Process according to patent claim 19, characterized in that

– the carrier plate (GR) consists of graphite.

21. Process according to patent claim 19 or 20, characterized in that

– the furnace takes the form of a continuous furnace.

22. Process according to patent claim 19, 20 or 21, characterized in that

– the carrier plate (GR) has a hump (ZA), over which the ring (RI) is pushed and on which the lens (K) is placed.

23. Process according to patent claims 20 and 22, characterized in that

– the carrier plate (GR) has a bore hole, through which a graphite pin (ZA) is plugged in such a way that a part of the pin (ZA) projects as a hump above the surface of the carrier plate (GR).

24. Process according to one of patent claims 19 to 23, characterized in that

– before the carrier plate (GR) is brought into the heating zone, a metallic coating (solder paste LP) is applied at the external surface of the ring (RI) as preparation for the later soldering of the ring (RI) to the housing wall (S).

## FIG 1

## FIG 2

FIG 3

# FIG 4

# FIG 5